# EUROPEAN PATENT APPLICATION

(11) **EP 1 950 726 A1**
(43) Date of publication of application: **30.07.2008**
(21) Application number: 07001769.4
(22) Date of filing: 26.01.2007
(51) Int. Cl.: G09F 19/14, G02B 27/22

(54) **Picture display frame**

(71) Applicant: Trusty Industrial Inc., Lou Chou Taipei Hsien (TW)
(72) Inventor: Chuang, Tony, Lu Chou Taipei Hsien (TW)
(74) Representative: Ruschke, Hans Edvard

(57) **Abstract**

A picture display frame comprising a framework (301), a picture (104) and a grating plate (101), wherein the picture (104) has more than one image, and is assembled with the grating plate (101) in the framework (301). The grating plate (101) has a smooth plane surface (103) facing outwards of the framework (301) and has an undulated surface (102) formed from a series of columns facing inwards of the framework (301) and are opposite to the picture (104) spaced therefrom, a gap (304) is formed between the picture (104) and the grating plate (101); the gap (304) is set to be equal to depth of focusing of the columns of the grating plate (101) formed in refraction of light beams. The surface of the grating plate (101) can be applied by spraying with scraping durable paint, it needs not to increase the thickness of the grating plate (101) for having a deep focus and a good stereographic effect, this largely reduces the cost of the grating plate (101).

## Description

### BACKGROUND OF THE INVENTION

### 1. Field of the invention

The present invention relates to an improved structure of a picture display frame used as a picture frame or an advertisement billboard, and especially to a display frame in which a grating plate has a smooth plane surface facing outwards of a framework of the display frame and an undulated surface formed from a series of columns (which are arciform in sections) facing inwards of the framework and being opposite to a picture spaced therefrom.

### 2. Description of the Prior Art

Products each giving a feeling of stereogram or each with an effect of changing of more than two pictures according to the principle of refraction of a cylindrical mirror grating are more and more popularized; each product has in its picture frame a picture and a grating plate.

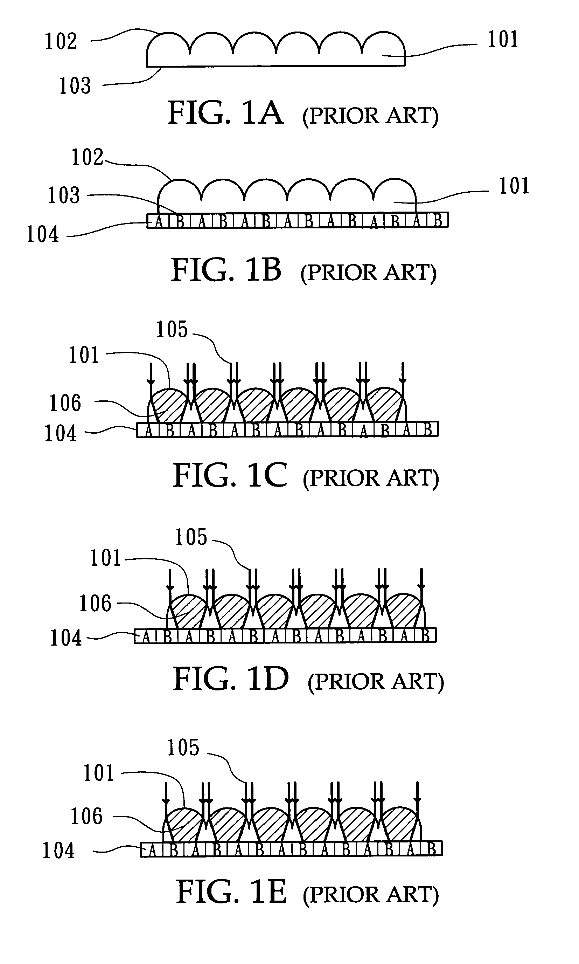

Fig. 1A shows a grating plate 101 having an undulated surface 102 formed from a series of columns which are arciform in sections and are lined equidistantly, and having a bottom smooth plane surface 103.

Referring to Fig. 1B showing a conventional technique in which an undulated surface 102 formed from a series of columns (which are arciform in sections) of a grating plate 101 faces upwards, and a lower plane surface 103 contacts or is stuck with glue to a picture 104, wherein the picture 104 can include one image or more than two images, in the drawing as an example, it is shown there two images A and B.

In Fig. 1C to 1E which show the basic action principle of changing of the picture 104 viewing through the grating plate 101.

In Fig. 1C, when lines of sight 105 of two eyes enter the grating plate 101, the range of focusing becomes narrower by light refraction, a stationary focus area 106 is there at the bottom of the grating plate 101; when two images A and B are repeatedly and alternately arranged in the odd and even numeral sequence to form a picture 104 which is closely clung to the bottom of the grating plate 101, if the focus area 106 happens to include the complete scope of an image B, what is seen on the grating plate 101 is a complete image B; if the focus area 106 happens to include the complete scope of an image A, what is seen on the grating plate 101 is a complete image A (as shown in Fig. 1D). If the focus area 106 includes the images A and B, what is seen on the grating plate 101 is a scope including both the images A and B (as shown in Fig. 1E).

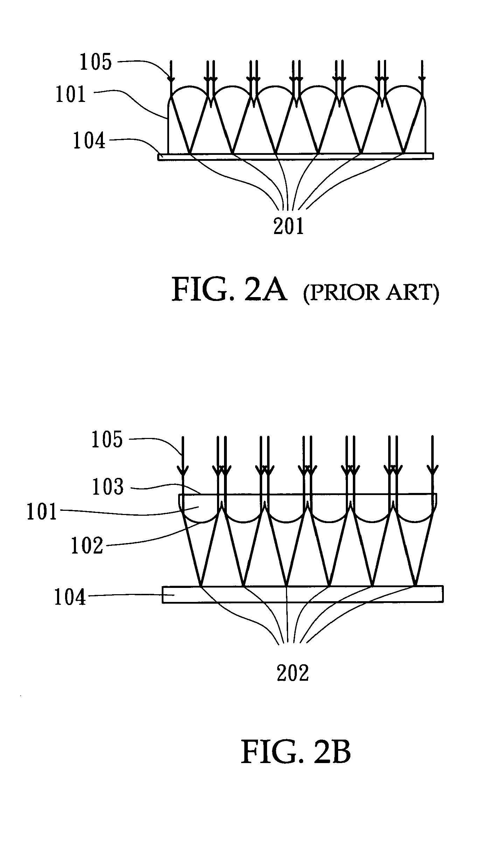

The conventional structure has two defects:
1. The grating plate 101 is made of plastic, the surface of plastic is subjected to damage by scraping, when an undulated surface 102 formed from a series of columns (which are arciform in sections) of a grating plate 101 is exposed, the brightness and cleanness of the surface are subjected to being destroyed by touching or wiping to thereby affect the effect of presenting of images. Although the technique of spraying applying transparent scraping durable paint has been mature, but it does not suit protecting the undulated surface 102 of the grating plate 101; because liquid material may fill up the dented portions at lateral sides of every strip forming the undulated surface 102, the effect of refraction loses.
2. The grating plate 101 gets images according to the principle of image forming by focusing with a plano-convex lens, each arciform surface of a column has a stationary focus, referring to Fig. 2A, when lines of sight enter a column (with an arciform surface) of the grating plate 101, they are refracted and focused on a point 201; if a picture 104 happens to be contacted with this point 201, it can be seen most clearly and can have the best stereographic effect; it needs to increase the thickness of the grating plate 101 to get a deep focus point and a good stereographic effect, and this will increase the cost.

### SUMMARY OF THE INVENTION

The main improvement of the present invention is to use a grating plate reversely, that is, a smooth plane surface is used as a front surface in order that light beams are not refracted and enter the grating plate perpendicularly, till the light beams reach columns with arciform sectional areas on the bottom of the grating plate and meet different media in air and are refracted and focused on one point, then a picture can be mounted at this point.

The improved structure of a display frame for a picture can be applied by spraying with scraping durable paint to eliminate the above stated number one defect of the conventional structure, and it needs not to increase the thickness of the grating plate to get an object of having a deep focus point and a good stereographic effect, this will largely reduce the cost and solve the above stated number two defect.

The present invention will be apparent in its structure and functions after reading the detailed description of the preferred embodiment thereof in reference to the accompanying drawings.

### BRIEF DESCRIPTION OF THE DRAWINGS

Fig. 1A is a schematic view showing the basic structure of a grating plate;
Fig. 1B is a schematic view showing the way of combination of a picture with the grating plate in a conventional structure;
Figs. 1C to E are schematic views showing the principle of presenting different image effects on the grating plate;
Fig. 2A is a schematic view showing the condition that a grating plate shall have when the conventional structure is to present the best effect of image;
Fig. 2B is a schematic view showing the way of mating of a grating plate with a picture in present invention;
Fig. 3 is a sectional view of a first embodiment of the present invention;
Fig. 4 is a sectional view of a second embodiment of the present invention;
Fig. 5 is an anatomic perspective view of a third embodiment of the present invention;
Fig. 6 is a partial enlarged perspective view of the third embodiment of the present invention;
Fig. 7 is a sectional view of the third embodiment of the present invention;
Fig. 8A is a side view of a fourth embodiment of the present invention;
Fig. 8B is a front view of the fourth embodiment of the present invention.

### DETAILED DESCRIPTION OF THE PREFERRED EMBODIMENT

Referring to Fig. 2B showing the principle of the present invention, the main improvement of the present invention is to use a grating plate 101 reversely, that is, a smooth plane surface 103 of the grating plate 101 faces outwards of the framework of display frame and an undulated surface 102 formed from a series of columns (which are arciform in sections) faces inwards of the display frame and are opposite to a picture 104. When lines of sight enter the grating plate 101, the front surface of the grating plate 101 is the smooth plane surface 103, light beams will not be refracted but enter the grating plate 101 perpendicularly, till the light beams reach the undulated surface 102 with columns being arciform sectionally of on the bottom of the grating plate 101 and meet different media in air and are refracted and focused on one point 202; then the picture 104 having more than one image can be mounted at this point 202.

The smooth plane surface 103 of the grating plate 101 of the improved structure faces outwards of the display frame, so that the smooth plane surface 103 of the grating plate 101 can be applied by spraying with scraping durable paint to eliminate the above stated number one defect of the conventional structure, and it needs not to increase the thickness of the grating plate 101 to get an object of having a deep focus point and a good stereographic effect, this will largely reduce the cost and solve the above stated number two defect.

Moreover, the smooth plane surface 103 of the grating plate 101 can also be covered with a protective transparent plastic plate or glass plate; the grating plate 101 can be a cylindrical mirror grating or a narrow seam grating.

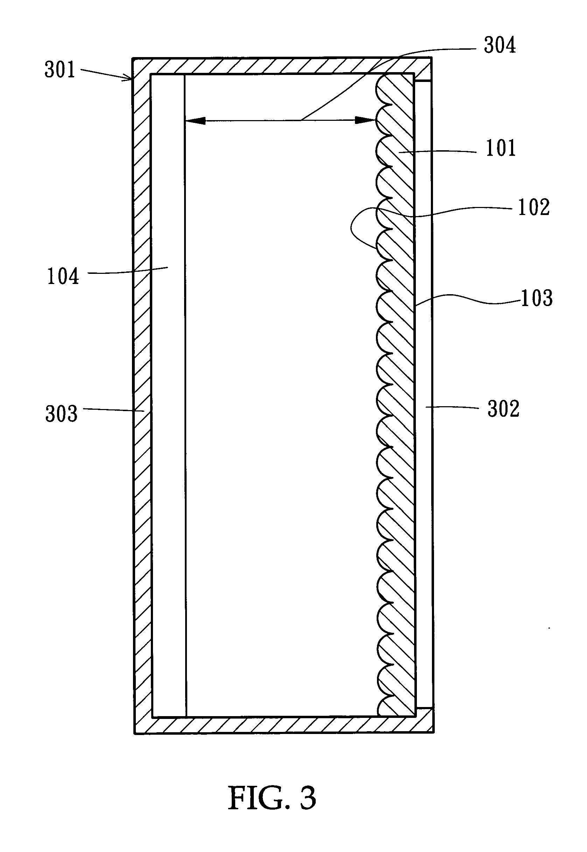

Fig. 3 shows a simple embodiment of the present invention, wherein a framework 301 has a opened side 302, the opened side 302 of the framework 301 is mounted therein with a grating plate 101, a smooth plane surface 103 of the grating plate 101 faces outside of the opened side 302 of the framework 301, and an undulated surface 102 formed from a series of columns (which are arciform in sections) faces inwards; a picture 104 having more than one image is mounted on an inner side of a bottom surface 303 at the left side of the framework 301, and the surface of the picture 104 faces toward the grating plate 101. A gap 304 between the picture 104 and the grating plate 101 equals the depth of focusing of the series of columns (which are arciform in sections) of the grating plate 101.

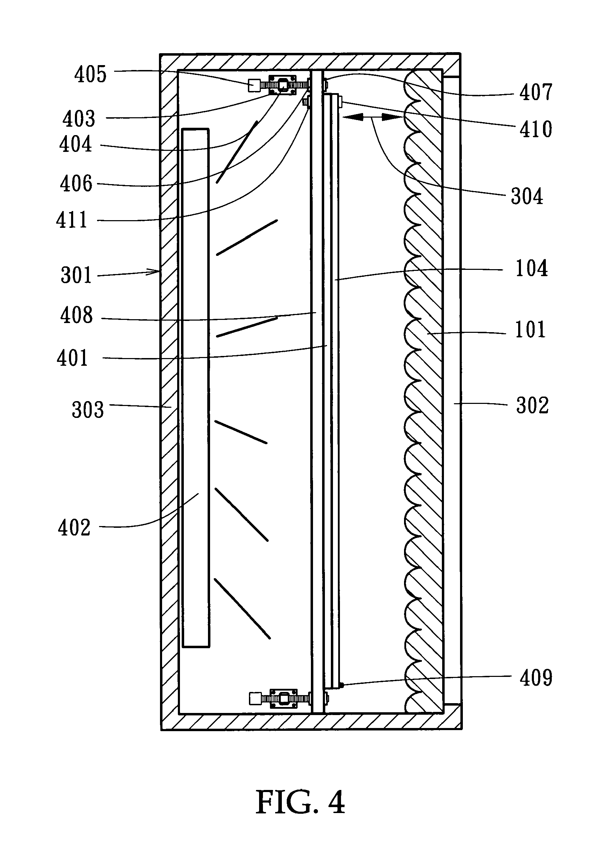

Referring to Fig. 4 showing a second embodiment of the present invention, in which the framework 301 in the first embodiment is fixedly provided with a left and a right supporting seat 403, the supporting seats 403 each is provided with a nut 404, a movable bolt 405 is locked in each of the nuts 404, then nuts 406 are locked on the tailing ends respectively of the movable bolts 405 at suitable positions. The bolts 405 are extended into a hollow framework 408 having on its two lateral ends holes for the movable bolts 405 and then are screw connected each with a nut 407 on their tailing ends to prevent the hollow framework 408 from dropping, and after a picture 104 is stuck on a transparent plane plate 401, the bottom of the plane plate 401 has a middle hole (not shown) which is slipped over a stub 409 at the middle of the bottom of the hollow framework 408; the top of the plane plate 401 has a middle hole (not shown) which is slipped over a movable bolt 410, the movable bolt 410 is further extended through a rectangular hole (not shown) of the hollow framework 408, the picture 104 is adjusted to be in a correct angular position in opposite and parallel to the series of columns of the grating plate 101, then a nut 411 is used to stick and fix the transparent plane plate 401 to the hollow framework 408, now the hollow framework 408 can be adjusted for front and rear positions with the movable bolts 405 to set the best gap 304 between the picture 104 and the grating plate 101; and an inner side of the bottom surface 303 of the framework 301 is installed with a light emitting member 402 to get an effect of lamp box. And the framework 301 is provided therein with electronic elements such as a power line for providing the light emitting member 402 with electric power, a voltage stabilizer and a switch etc.

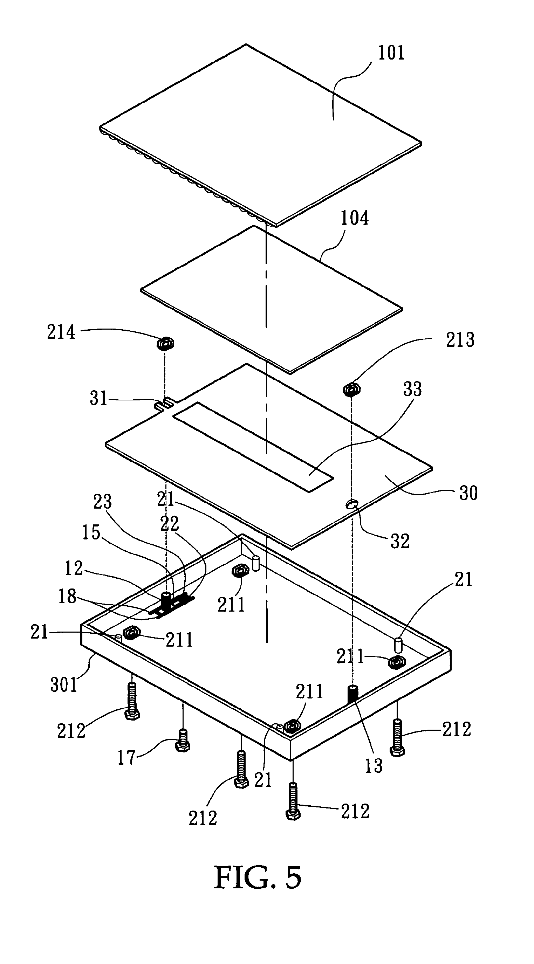

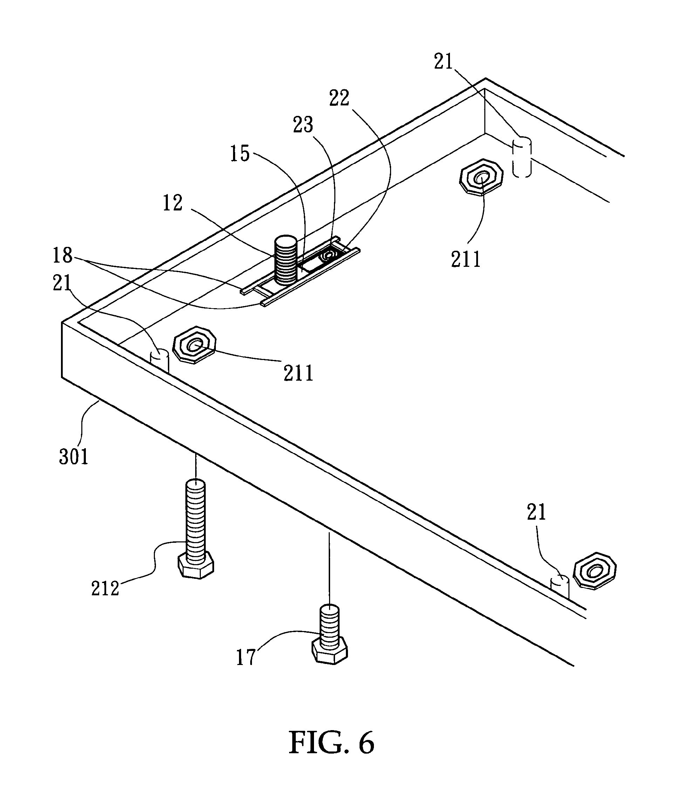

Referring to Figs. 5 and 6 showing an anatomic perspective view of a third embodiment of the present invention, the embodiment comprises the basic elements including a framework 301, a picture 104 and a grating plate 101.

Wherein the framework 301 is provided on its inner upper surface with a rectangular hole 22 which has at each of its two lateral sides rails 18 protruding out of the framework 301; the rails 18 are mounted therebetween with a movable slide plate 15, the movable plate 15 is fixedly provided thereon with a bolt 12 and a nut 23, the nut 23 is locked by a bolt 17 slipped in it from outside of the bottom of the framework 301.

The framework 301 has a fixed bolt 13 at a lower area inside of it, the four corners of the framework 301 are provided each with a round stub 21 protruding out of the bottom of the framework 301; near the four round stubs 21 inside of the framework 301, there are four further nuts 211 on the bottom of the framework 301, the four nuts 211 each is locked with a bolt 212 extending from outside of the framework 301.

A plane plate 30 for being stuck thereon a picture is provided on its upper area with a rectangular notch 31, and is provided on its lower area with a round hole 32; and it is applied at a middle area thereof with a two side adhesive tape 33. And a picture 104 is stuck onto the plane plate 30.

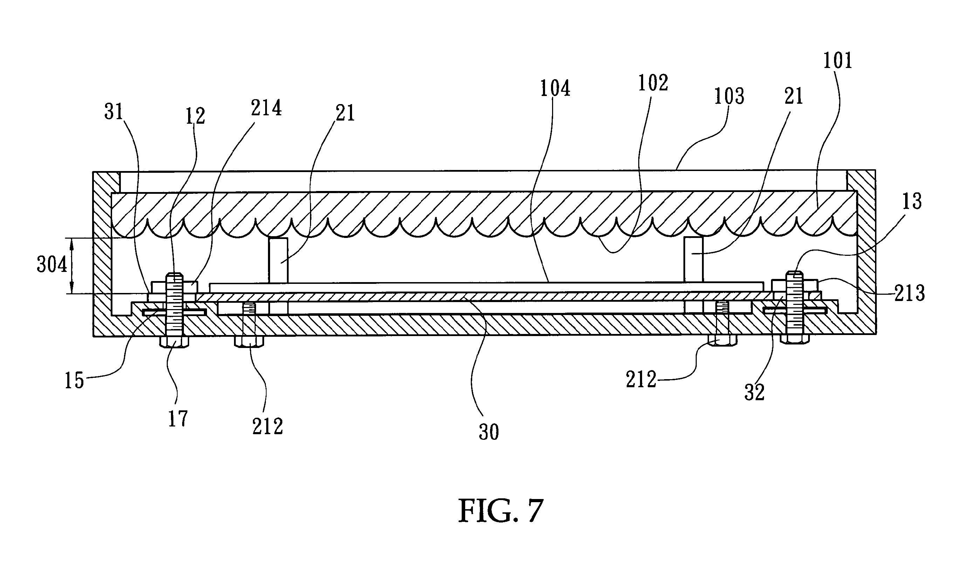

When in assembling, the picture 104 is stuck onto the two side adhesive tape 33 on the plane plate 30, then the plane plate 30 is placed in the framework 301; the round hole 32 provided on lower area of the plane plate 30 is slipped over the fixed bolt 13, and the rectangular notch 31 provided on the upper area of the plane plate 30 is slipped over the bolt 12, at this time, the plane plate 30 is supported by the four bolts 212, then the smooth plane surface 103 of the grating plate 101 is placed to face upwards, and an undulated surface 102 formed from a series of columns (which are arciform in sections) faces downwards and is placed above the plane plate 30 to be supported by the four round stubs 21, and is tightly clamped by the framework 301 that it can not be moved as is shown in Fig. 7. If angular position of the picture 104 now is asymmetric with the columns (which are arciform in sections) of the grating plate 101, the bolt 17 can be loosened to move the movable slide plate 15, thus the bolt 12 brings the picture 104 to change angular position. When the picture 104 is at its correct position, the bolt 17 is tightened to prevent the picture 104 from displacing; and then the four bolts 212 supporting the plane plate 30 are adjusted in height, and a suitable gap 304 between the picture 104 and the grating plate 101 can be obtained after changing; when the gap 304 is adjusted, a nut 213 is screw connected with the bolt 13, and a nut 214 is screw connected with the bolt 12 to thereby fix the plane plate 30 at a correct height; at last, the framework 301 can be added on its surface with a decorative panel (not shown), and assembling of the present invention is completed.

In the third embodiment, briefly, the framework 301 is provided with a device for adjusting the angular position and height of the plane plate 30, in order that the picture 104 can be adjusted relatively to the grating plate 101 for getting its correct display position.

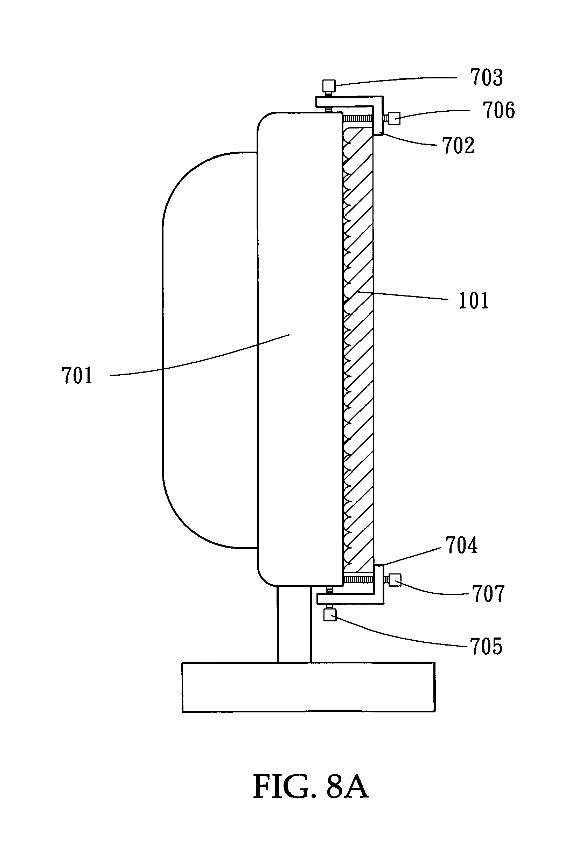

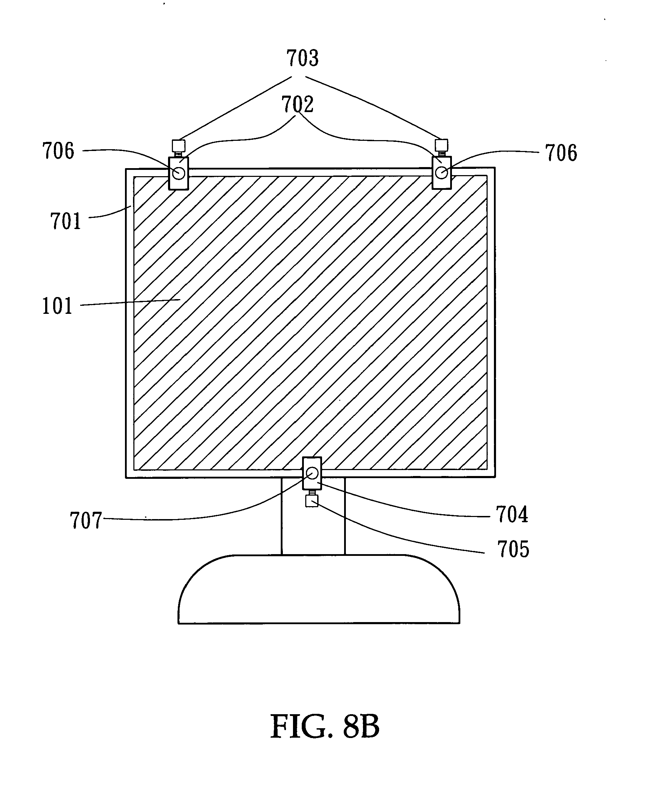

Referring to Figs. 8A and 8B which are respectively a side view and a front view of a fourth embodiment of the present invention, wherein a plane display 701 is mounted on its front side with a grating plate 101 of which a series of columns (which are arciform in sections) face to the plane display 701 and keep a distance between it and a picture; a smooth plane surface of the grating plate 101 faces outwards of the plane display 701, and the grating plate 101 is provided at its two lateral sides of its upper edge each with an "L" shaped bracing member 702, the bracing members 702 each is screw connected with a movable bolt 706 at an area near the front surface of the plane display 701; the two movable bolts 706 are rotated to adjust a gap 304 between the grating plate 101 and the picture on the plane display 701. Areas of the bracing members 702 near the top of the plane display 701 each is screw connected with a movable bolt 703, the two movable bolts 703 are rotated to adjust verticality of the grating plate 101; the grating plate 101 is provided at the middle of its lower edge with another "L" shaped bracing member 704, the bracing member 704 is screw connected with a movable bolt 707 at an area near the front surface of the plane display 701, the movable bolt 707 is rotated to adjust a gap between the grating plate 101 and the picture on the plane display 701; the bracing member 704 is further screw connected with a movable bolt 705 at an area near the bottom surface of the plane display 701; when the movable bolt 705 is unscrewed, the grating plate 101 can be removed easily from the plane display 701, and when the movable bolt 705 is tightly screwed in, the grating plate 101 can be fixed on the plane display 701 and is not subjected to dropping, so long as the images on the picture on the plane display 701 are specifically dealt with, an effect of having a feeling of stereogram can be obtained from the grating plate 101.

Having thus described the technical structure of my invention with practicability and improvement, what I claim as new and desire to be secured by Letters Patent of the EPO is:

## Claims

1. An improved structure of a picture display frame comprising:
a framework (301) with an opened side (302);
a grating plate (101) having a smooth plane surface (103) and an undulated surface (102) formed from a series of columns which are arciform in sections, and being provided at said opened side (302); and
a picture (104) having more than one image mounted in said framework (301) and being parallel to said grating plate (101);
said grating plate (101) is mounted in said framework (301) with said smooth plane surface (103) of said grating plate (101) facing outside of said framework (301) and with said undulated surface (102) formed from said columns (which are arciform in sections) facing inwards; a gap (304) formed between said picture (104) and said grating plate (101) is set to be equal to depth of focusing of said columns of said grating plate (101) formed in refraction of light beams.

2. The improved structure of a picture display frame as claimed in claim 1, wherein said smooth plane surface (103) of said grating plate (101) is applied by spraying with transparent scraping durable paint.

3. The improved structure of a picture display frame as claimed in claim 1, wherein said smooth plane surface (103) of said grating plate (101) is covered with a protective transparent plastic plate or glass plate.

4. The improved structure of a picture display frame as claimed in claim 1, wherein an inner side of a bottom surface of said framework (301) is installed with a light emitting member (402), and said framework (301) is provided therein with electronic elements such as a power line for providing said light emitting member (402) with electric power, a voltage stabilizer and a switch.

5. The improved structure of a picture display frame as claimed in claim 1, wherein a picture (104) is stuck onto a plane plate (30), said framework (301) is provided with a device for adjusting angular position and height of said plane plate (30), in order that said picture (104) is adjusted relatively to said grating plate (101) for getting its correct display position.

6. The improved structure of a picture display frame as claimed in claim 5, wherein said device for adjusting angular position and height of said plane plate (30) has a movable slide plate (15) at an inner upper area of said framework (301), said movable plate (15)is fixedly provided thereon with a bolt (12) and a nut (23), said nut (23) is locked by another bolt (17) slipped in it from outside of a bottom of said framework (301), said framework (301) has a fixed bolt (13) at a lower area inside of it, four corners of said framework (301) are provided each with a round stub (21) to support and fix said grating plate (101); near said four round stubs (21) inside of said framework (301), there are four further nuts on said framework, said four nuts (211) each is locked by a bolt (212) extending from outside of said bottom of said framework (301) for supporting and adjusting height of said plane plate (30), said plane plate (30) for being stuck thereon said picture (104) is provided on its upper area with a rectangular notch (31) and is provided on its lower area with a round hole (32), said rectangular notch (31) is slipped over said bolt (12) of said movable plate (15), and another nut (214) is used to slip over said bolt (12) of said movable plate (15), said round hole (32) provided on a lower area of said plane plate (30) is slipped over said fixed bolt (13) on a lower area of said framework (301), and another nut (213) is used to screw connect with said fixed bolt (13); said grating plate (101) is mounted over said picture (104) and is fixed by said framework (301).

7. The improved structure of a picture display frame as claimed in claim 1, wherein said grating plate (101) is a cylindrical mirror grating.

8. The improved structure of a picture display frame as claimed in claim 1, wherein said grating plate (101) is a narrow seam grating.

9. An improved structure of a picture display frame comprising:
a display (701) having a surface for displaying a picture (104);
a grating plate (101) having a smooth plane surface (103) and an undulated surface (102) formed from a series of columns which are arciform in sections, and being provided on said surface of said display (701); and
said picture (104), having more than one image and being parallel to said grating plate (101);
said smooth plane surface (103) of said grating plate (101) faces outwards of said surface of said display (701), and said undulated surface (102) formed from a series of columns faces inwards of said display (701); a gap (304) is formed between said grating plate (101) and said picture (104), said gap (304) is set by depth of focusing of said series of columns of said grating plate (101) formed in refraction of light beams.

10. The improved structure of a picture display frame as claimed in claim 9, wherein said grating plate (101) is provided at its peripheral sides with a plurality of bracing members (702), said bracing members (702) each is screw connected with a movable bolt (706) on said display (701); said movable bolts (706) are rotated to adjust verticality of said grating plate (101) and to adjust a gap (304) between said grating plate (101) and said picture (104) on said display (701); so that said picture (104) is adapted to adjusting relatively to said grating plate (101) for getting its correct display position.
